(19)

Europäisches
Patentamt
European
Patent Office
Office européen
des brevets

(11) **EP 4 728 913 A1**

(12) **EUROPEAN PATENT APPLICATION**
published in accordance with Art. 153(4) EPC

(43) Date of publication:
**22.04.2026 Bulletin 2026/17**

(21) Application number: **24822615.1**

(22) Date of filing: **05.06.2024**

(51) International Patent Classification (IPC):
**A24F 40/57** (2020.01)    **A24F 40/50** (2020.01)
**A24F 40/90** (2020.01)

(52) Cooperative Patent Classification (CPC):
**A24F 40/50; A24F 40/57; A24F 40/90**

(86) International application number:
**PCT/CN2024/097524**

(87) International publication number:
**WO 2024/255664 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.06.2023   CN 202310702591**

(71) Applicant: **Shenzhen First Union Technology Co.,
Ltd.
Shenzhen, Guangdong 518000 (CN)**

(72) Inventors:
• **LONG, Zhi
  Shenzhen, Guangdong 518000 (CN)**
• **XU, Zhongli
  Shenzhen, Guangdong 518000 (CN)**
• **LI, Yonghai
  Shenzhen, Guangdong 518000 (CN)**

(74) Representative: **Proi World Intellectual Property
GmbH
Obermattweg 12
6052 Hergiswil, Kanton Nidwalden (CH)**

(54) **CONTROL METHOD FOR AEROSOL GENERATING APPARATUS, AND AEROSOL
GENERATING APPARATUS**

(57)    A control method for an aerosol generating apparatus (100), and an aerosol generating apparatus (100). The aerosol generating apparatus (100) comprises a heating element (30) and a battery cell (10), wherein the battery cell (10) is used for providing power to the heating element (30), and the heating element (30) is used for heating an aerosol product (200) to generate an aerosol. The method comprises: acquiring a minimum voltage value which is output by a battery cell (10) within the current operating cycle; comparing the minimum voltage value with a preset threshold voltage; if the minimum voltage value is less than the threshold voltage, generating a warning sign, and storing same; and according to the warning sign, determining that an aerosol generating apparatus (100) does not start within the next operating cycle. By means of the control method, the problem of an aerosol generating apparatus (100) being prone to generating abnormalities within the next operating cycle when the electric quantity of a battery cell (10) of the aerosol generating apparatus (100) is insufficient can be avoided.

FIG. 3

## Description

### CROSS-REFERENCE TO RELATED APPLICATIONS

This application claims priority to Chinese Patent Application No. 202310702591.6, filed with the China National Intellectual Property Administration on June 13, 2023, and entitled "CONTROL METHOD FOR AEROSOL GENERATING APPARATUS, AND AEROSOL GENERATING APPARATUS", which is incorporated herein by reference in its entirety.

### TECHNICAL FIELD

Embodiments of this application relate to the field of aerosol technologies, and in particular, to a control method for an aerosol generating apparatus, and an aerosol generating apparatus.

### BACKGROUND

Conventional tobacco products (for example, cigarettes and cigars) burn tobacco during use to generate tobacco smoke. In the current technology, products that release compounds through heating without burning have been developed to replace these conventional tobacco products. Examples of such products are aerosol generating apparatuses. These apparatuses usually include a heating element and an aerosol product. The aerosol product may be a solid tobacco or non-tobacco filler, or may be a liquid including nicotine and/or flavorings and/or aerosol generating substances (for example, glycerin). The heating element heats the aerosol product, so that at least a part of an active substance of the aerosol product is volatilized or atomized under heat, thereby generating an aerosol.

Such apparatuses are usually powered by rechargeable batteries. As the aerosol generating apparatuses continue to operate, electric quantity of the batteries gradually depletes. When the electric quantity is consumed to a certain extent, the batteries cannot sustain the aerosol generating apparatuses to complete a next operating cycle, generating abnormalities of the aerosol generating apparatuses within the next operating cycle.

### SUMMARY

An embodiment of this application provides a control method for an aerosol generating apparatus, to resolve a technical problem of the aerosol generating apparatus being prone to generating abnormalities within a next operating cycle when electric quantity of a battery is insufficient.

A control method for an aerosol generating apparatus, where the aerosol generating apparatus includes a heating element and a battery cell, the battery cell is used to provide power to the heating element, and the heating element is used to heat an aerosol product to generate an aerosol, the control method includes:

> acquiring a minimum voltage value outputted by the battery cell within a current operating cycle;
> comparing the minimum voltage value with a preset threshold voltage;
> generating a warning sign and storing the warning sign if the minimum voltage value is less than the threshold voltage; and
> determining, based on the warning sign, that the aerosol generating apparatus does not start heating within a next operating cycle.

In an embodiment, the acquiring a minimum voltage value outputted by the battery cell within a current operating cycle includes:

> acquiring a voltage value outputted by the battery cell when a preheating phase ends; and
> determining the voltage value as the minimum voltage value.

In an embodiment, the acquiring a minimum voltage value outputted by the battery cell within a current operating cycle includes:

> acquiring a current output voltage value of the battery cell;
> comparing the current output voltage value with a previous output voltage value of the battery cell; and
> storing the current output voltage value if the current output voltage value is less than the previous output voltage value of the battery cell; or
> storing the previous output voltage value if the current output voltage value is greater than the previous output voltage value of the battery cell.

In an embodiment, the preset threshold voltage includes a minimum system operating voltage.

In an embodiment, the aerosol generating apparatus further includes a prompt unit, the prompt unit is used to generate prompt information when the preheating phase ends, and the threshold voltage includes a minimum voltage required by the prompt unit for normal operation.

In an embodiment, the acquiring a voltage value outputted by the battery cell when a preheating phase ends includes:

> acquiring a current temperature of the heating element; and
> controlling, if the current temperature reaches a preset temperature in the preheating phase, to acquire a voltage value outputted by the battery cell.

In an embodiment, the method further includes:

acquiring a charging signal of the aerosol generating apparatus; and

canceling the warning sign based on the charging signal.

In an embodiment, the canceling the warning sign based on the charging signal further includes:

recording maintaining duration of the charging signal;

controlling, if the maintaining duration reaches preset duration, to cancel the warning sign; or

keeping the warning sign if the maintaining duration is less than the preset duration.

In an embodiment, during the generating a warning sign and storing the warning sign if the voltage value is less than the threshold voltage, the method further includes:

controlling the heating element not to stop heating within the current operating cycle.

An embodiment of this application further provides a control method for an aerosol generating apparatus, where the aerosol generating apparatus includes a heating element and a battery cell, the battery cell is used to provide power to the heating element, and the heating element is used to heat an aerosol product to generate an aerosol. The control method includes:

acquiring output voltage values of the battery cell for a plurality of times;

comparing an output voltage value acquired each time with a preset threshold voltage;

generating a warning sign and storing the warning sign if the output voltage value is less than the threshold voltage; and

determining, based on the warning sign, that the aerosol generating apparatus does not start heating within a next operating cycle.

An embodiment of this application further provides an aerosol generating apparatus, including a controller, where the controller includes a processor and a memory, the memory stores a computer program, and the processor implements the control method for an aerosol generating apparatus in the foregoing embodiments when executing the computer program.

In an embodiment, the aerosol generating apparatus includes an LDO circuit electrically connected to the battery cell, and the threshold voltage includes a minimum input voltage of the LDO circuit.

According to the control method provided in the foregoing embodiments, the minimum voltage value outputted by the battery cell within the current operating cycle is acquired, the voltage value is compared with the threshold voltage, and if the voltage value is less than the threshold voltage, the warning sign is outputted, and the warning sign is stored, so that the aerosol generating apparatus does not start heating within the next operating cycle based on the warning sign, thereby avoiding the problem of the aerosol generating apparatus being prone to generating abnormalities within the next operating cycle when the electric quantity of the battery cell is insufficient.

## BRIEF DESCRIPTION OF THE DRAWINGS

One or more embodiments are exemplarily described with reference to the corresponding accompanying drawings, and the descriptions are not to be construed as limiting the embodiments. Elements in the accompanying drawings that have same reference numerals are represented as similar elements, and unless otherwise particularly stated, the figures in the accompanying drawings are not drawn to scale.

FIG. 1 is a schematic structural diagram of an aerosol generating apparatus according to an embodiment of this application;

FIG. 2 is a schematic structural diagram of an aerosol generating apparatus according to an embodiment of this application;

FIG. 3 is a schematic flowchart of a control method for an aerosol generating apparatus according to an embodiment of this application;

FIG. 4 is diagrams of heating curves of a first operating cycle and a second operating cycle of an aerosol generating apparatus;

FIG. 5 is a schematic flowchart of a control method for an aerosol generating apparatus according to an embodiment of this application;

FIG. 6 is a schematic flowchart of a control method for an aerosol generating apparatus according to an embodiment of this application;

FIG. 7 is a schematic structural diagram of a controller hardware of an aerosol generating apparatus according to an embodiment of this application; and

FIG. 8 is a schematic flowchart of a control method for an aerosol generating apparatus according to an embodiment of this application.

## DETAILED DESCRIPTION

For ease of understanding of this application, this application is described below in more detail with reference to the accompanying drawings and specific embodiments. It should be noted that, when an element is expressed as "being fixed to" or "being secured to" another element, the element may be directly on the another element, or one or more intermediate elements may exist between the element and the another element. When an element is expressed as "being connected to" another element, the element may be directly connected to the another element, or one or more intermediate elements may exist between the element and the another element. The terms "upper", "lower", "left", "right", "inner", "outer", and similar expressions used in this specification are merely used for an illustrative purpose.

Unless otherwise defined, meanings of all technical and scientific terms used in this specification are the same as those usually understood by a person skilled in the technical field to which this application belongs. Terms used in the specification of this application are merely intended to describe objectives of the specific embodiments, but are not intended to limit this application. A term "and/or" used in this specification includes any or all combinations of one or more related listed items.

In addition, technical features involved in different embodiments of this application described below may be combined together if there is no conflict.

In the embodiments of this application, the "mounting" includes fixing or restricting an element or an apparatus to a specific position or place in a manner such as soldering, screwing, clamping, or bonding. The element or the apparatus may keep still at the specific position or place or may move within a limited range. The element or the apparatus may be disassembled or may not be disassembled after being fixed or restricted to the specific position or place. This is not limited in the embodiments of this application.

In addition, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In description of this application, "a plurality of" means at least two, such as two and three unless it is specifically defined otherwise.

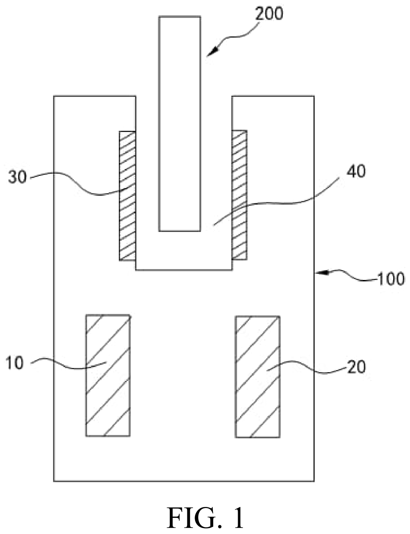

An embodiment of this application provides an aerosol generating apparatus 100. As shown in FIG. 1, the aerosol generating apparatus 100 includes a battery cell 10, a mainboard 20, and a heating element 30. A controller of the aerosol generating apparatus 100 is disposed on the mainboard 20. The battery cell 10 and the heating element 30 are separately electrically connected to the controller, so that the controller can control the battery cell 10 to provide electric energy to the heating element 30. The aerosol generating apparatus 100 is further provided with a longitudinally extending cavity 40. The cavity 40 is used for accommodating an aerosol generating product 200 matched with the aerosol generating apparatus 100. The heating element 30 is attached to an outer wall of the cavity 40, to heat the aerosol generating product 200 in the cavity 40. A part of an active substance filled in the aerosol generating product 200 is volatilized under heat, to generate an aerosol, and a user can vape on the aerosol generating product 200 to inhale the aerosol.

The aerosol generating product 200 is preferably made of a tobacco-containing material that releases a volatile compound from the product during heating, or may be a non-tobacco material that is suitable for generating smoke through electrical heating after heating. The aerosol generating product 200 is preferably made of a solid substrate, which may include one or more of vanilla leaf, tobacco leaf, homogenized tobacco, and expanded tobacco in one or more forms of powders, granules, fragments, shreds, strips, or flakes. Alternatively, the solid substrate may include an additional tobacco or non-tobacco volatile aroma compound to be released upon heating of the substrate.

In some embodiments, the heating element 30 may be a mesh resistive heating body wrapped around the outer wall of the cavity 40. The mesh resistive heating body 40 is electrically connected to the mainboard 20. The heating element 30 generates heat after being powered on, and transfers the heat through the cavity wall of the cavity 40 to the aerosol generating product 200 in the cavity 40. A cavity body of the cavity 40 is made of a material of high thermal conductivity, to efficiently conduct the heat generated by the heating element 30 to the aerosol generating product 200. The material of high thermal conductivity may be a metal material or a ceramic material, and the ceramic material may be any one of an oxide, a nitride, a carbide, a boride, or the like.

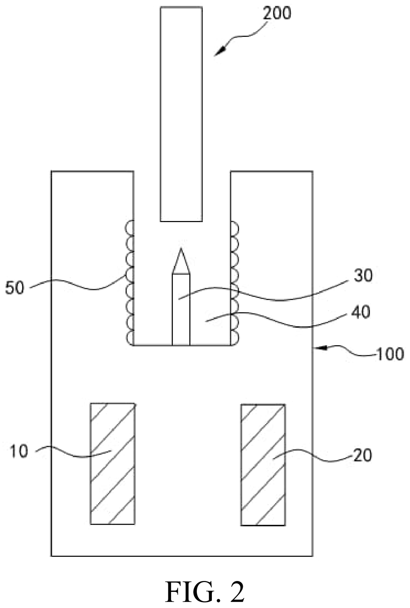

In another embodiment shown in FIG. 2, the aerosol generating apparatus 100 may alternatively heat the aerosol generating product 200 by means of electromagnetic induction heating. At least a part of the heating element 30 extends into the cavity 40, and an end part of the heating element 30 that extends into the cavity 40 is formed into a pin shape or a sheet shape, so that the heating element 30 is smoothly inserted into the aerosol generating product 200 for heating. A coil 50 is wound around the outer wall of the cavity 40. The controller controls the battery cell 10 to feed an alternating current to the coil 50. The coil 50 generates a changing magnetic field under an influence of the alternating current. The changing magnetic field penetrates the heating element 30, so that the heating element 30 generates an eddy current through induction. The heating element 30 generates heat under an influence of an eddy current effect and a magnetic hysteresis effect, thereby heating the aerosol generating substrate 200.

A suitable material of the heating element 30 may be any one of graphite, molybdenum, silicon carbide, stainless steel, niobium, aluminum, nickel, iron, copper, nickel compound, titanium, or metal material composite. In some embodiments, to better generate the eddy current through induction to improve heating efficiency, the heating element 30 is preferably made of a ferromagnetic material or composed of the ferromagnetic material. The ferromagnetic material is, for example, a ferritic iron, a ferromagnetic alloy (for example, a ferromagnetic steel or a stainless steel), a ferromagnetic particle, or a ferrite.

In some embodiments, the controller may be a general-purpose processor, a digital signal processor (DSP), an application-specific integrated circuit (ASIC), a field programmable gate array (FPGA), a microcontroller, an ARM (Acorn RISC Machine), or another programmable logic device, a discrete gate or transistor logic, a discrete hardware component, or any combination of these components. In addition, the controller may alternatively be any conventional processor, controller, microcontroller, or state machine. The controller may alternatively be implemented as a combination of computing devices, for example, a combination of a DSP and a microprocessor, a plurality of microprocessors, a combination of one or more microprocessors and a DSP, and/or any other such configuration. The controller 6 may alternatively be an inverter board or a main control board of a washing machine.

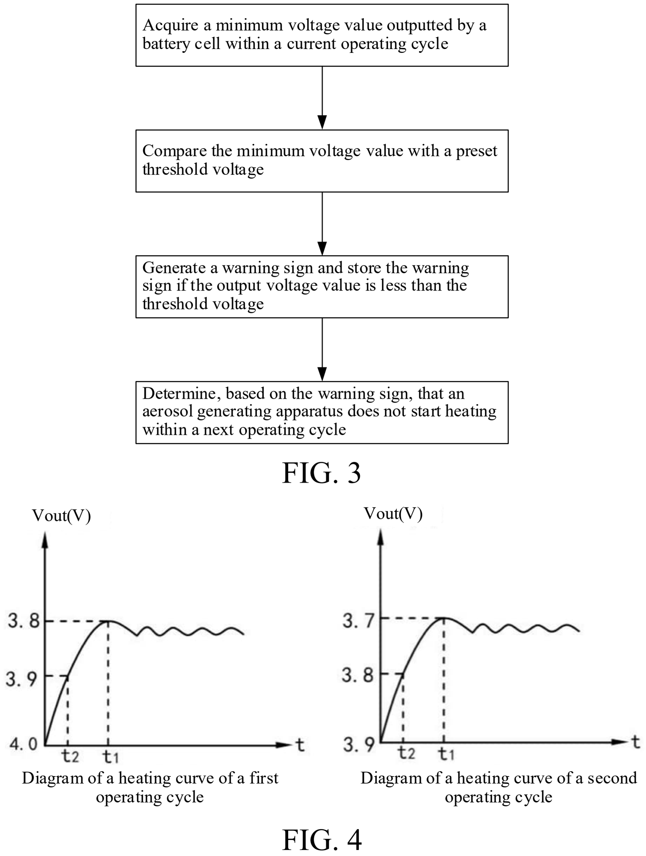

Based on the foregoing aerosol generating apparatus 100, an embodiment of this application provides a control method for the aerosol generating apparatus 100, to prevent the aerosol generating apparatus 100 from starting heating within the next operating cycle when electric quantity of the battery cell 10 is insufficient, and to prevent the aerosol generating apparatus 100 from generating large abnormalities during the next operating cycle. As shown in FIG. 3, the method includes the following steps:

S10: Acquire a minimum voltage value outputted by the battery cell within a current operating cycle.

One operating cycle of the aerosol generating apparatus 100 usually includes a preheating phase and an inhaling phase. The preheating phase means that the battery cell 10 supplies high-power electricity to the heating element 30, rapidly heating the heating element 30 to a preset temperature. The preset temperature enables the aerosol generating product 200 to be volatilized under heat to generate a suitable aerosol. The inhaling phase refers to a phase in which the user inserts the aerosol generating product 200 into the aerosol generating apparatus 100 for inhaling. In the inhaling phase, the battery cell 10 basically maintains a temperature of the heating element 30 at the preset temperature with a low power, thereby ensuring that the suitable aerosol can be generated during the user's inhaling phase.

In the preheating phase, the high-power electricity is supplied to the heating element 20, and the power is usually constant. Therefore, at a moment at which the preheating phase ends, that is, at a moment of switching from the preheating phase to the inhaling stage, an output voltage of the battery cell 10 reaches a minimum point within the current operating cycle. In addition, generally in each operating cycle, the aerosol generating apparatus 100 maintains same power and same duration of the preheating period. Therefore, when the aerosol generating apparatus 100 is not charged, the output voltage of the battery cell 10 of the aerosol generating apparatus 100 when the preheating phase ends within the current operating cycle is lower than the output voltage when the preheating phase ends within the previous operating cycle.

As can be learned from heating curves of two operating cycles shown in FIG. 4, the output voltage of the battery cell 10 when the preheating phase ends within the second operating cycle (the next operating cycle) is lower than the output voltage within the first operating cycle (the current operating cycle). A period before t1 is the preheating phase, and a period after t1 is the inhaling phase. In addition, when the preheating phase starts, a no-load voltage of the battery cell 10 within the second operating cycle is less than a no-load voltage of the battery cell 10 within the first operating cycle. Therefore, by acquiring a voltage value outputted by the battery cell 10 when the preheating phase ends within the current operating cycle, the minimum output voltage that the battery cell 10 can currently reach when the battery cell 10 is not charged can be acquired.

Specifically, to accurately acquire the voltage value outputted by the battery cell 10 when the preheating phase ends, the voltage value may be acquired when the heating element 30 reaches the preset temperature. For example, the aerosol generating apparatus 100 may be provided with a temperature measurement element. The temperature measurement element is electrically connected to the controller. The temperature measurement element may monitor the temperature of the heating element 20 as a thermocouple or in a manner of infrared temperature measurement. When the temperature of the heating element 30 reaches the preset temperature, the temperature measurement element feeds back the preset temperature to the controller, and the controller can control to acquire an output voltage value of the battery cell 10 based on the preset temperature.

Alternatively, in some embodiments, it can be known according to a definition formula of TCR (temperature coefficient of resistance) that:

$$TCR = (R2 - R1)/R1 * 1/(T2 - T1)$$

The temperature of the heating element 30 may alternatively be represented by a resistance value of the heating element 30. That is, a preheating temperature may be represented by a preset resistance value of the heating element 30. An actual resistance value of the heating element 30 can be acquired by measuring a voltage and a current of the heating element 30. When the actual resistance value reaches the preset resistance value, it indicates that the heating element 30 has reached the preset temperature. At this point, the aerosol generating apparatus 100 is switching from the preheating phase to the inhaling phase, and the controller can control to acquire the output voltage value of the battery cell 10, to acquire the output voltage value of the battery cell 10 when the preheating phase ends.

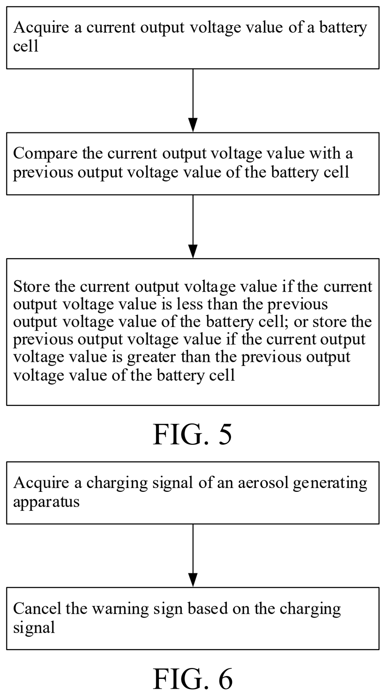

In some embodiments, the following method may further be used to acquire the minimum voltage value outputted by the battery cell within the current operating cycle, as shown in FIG. 5.

S11: Acquire a current output voltage value of the battery cell.

S12: Compare the current output voltage value with a previous output voltage value of the battery cell.

S13: Store the current output voltage value if the current output voltage value is less than the previous output voltage value of the battery cell; or

store the previous output voltage value if the current output voltage value is greater than the previous output voltage value of the battery cell.

Specifically, a voltage detection unit may be disposed in the aerosol generating apparatus 100. The voltage detection unit is electrically connected to the controller of the aerosol generating apparatus. The controller is configured to periodically control the voltage detection unit to detect the output voltage of the battery cell 10, compare the current output voltage value of the battery cell 10 with the previous output voltage value of the battery cell 10, and store the current output voltage value if the current voltage value is less than the previous output voltage value of the battery cell 10, or store the previous voltage value if the current voltage value is greater than the previous output voltage value of the battery cell.

For example, if the current output voltage of the battery cell 10 detected by the voltage detection unit is 3.9 V, and the previous output voltage of the battery cell 10 is 4.0 V, the controller stores the current output of 3.9 V. However, if the previous output voltage of the battery cell 10 is 3.8 V, the controller stores the previous voltage value of 3.8 V, so that by means of the serial comparison, after the entire operating cycle is completed, the controller stores the minimum output voltage value of the battery cell 10 within the entire operating cycle.

S20: Compare the voltage value with a threshold voltage.

S30: Control to output a warning sign and store the warning sign if the voltage value is less than the threshold voltage, so that the aerosol generating apparatus does not start heating based on the warning sign within the next operating cycle.

After the output voltage value of the battery cell 10 when the preheating phase ends is acquired in step S10, the threshold voltage may be preset in the aerosol generating apparatus 100, and the voltage value is compared with the threshold voltage. The threshold voltage refers to the minimum voltage value that can basically satisfy normal operation of an entire system of the aerosol generating apparatus 100 within the current operating cycle.

The threshold voltage may be, for example, a minimum operating voltage of the system. The minimum operating voltage of the system is a minimum operating voltage value that occurs at any point in the system at any time during the normal operation of the system. Specifically, the threshold voltage may be a minimum input voltage of an LDO (Low Dropout Regulator). In addition to the controller disposed on the mainboard 20, an LDO circuit is generally further disposed on the mainboard 20. The LDO is electrically connected between the battery cell 10 and an MCU or a peripheral device of the MCU on the mainboard 20, to stabilize the output voltage of the battery cell 10, and then supply the stabilized voltage to the MCU or the peripheral device of the MCU. An input voltage of the LDO usually has a range with the minimum input voltage. When the output voltage value of the battery cell 10 is less than the minimum input voltage of the LDO, the LDO cannot stabilize the voltage effectively, influencing power supply to the MCU or the peripheral device of the MCU. As a power supply module following the battery cell 10, the LDO provides a critical voltage within the minimum system operating voltage of the aerosol generating apparatus 100. Therefore, it is appropriate that the minimum input voltage of the LDO is used as the threshold voltage.

When the output voltage value of the battery cell 10 is less than the threshold voltage, the controller controls to output the warning sign and store the warning sign. When the aerosol generating apparatus 100 is in an operating cycle, the controller controls the aerosol generating apparatus 100 to first detect whether there is the warning sign. If there is the warning sign, it indicates that the electric quantity of the battery cell 10 is insufficient, and the aerosol generating apparatus 100 cannot be supported to complete this operating cycle. In other words, because the electric quantity of the battery cell 10 is insufficient, abnormalities may exist in the aerosol generating apparatus 100 within this operating cycle, and the controller controls, based on the warning sign, the heating element 30 not to start. In some embodiments, while the controller may control, based on the warning sign, the heating element 30 not to start, the controller may control the aerosol generating apparatus 100 to perform another function, for example, control an indicator light to operate normally to implement an indication function. Alternatively, in some embodiments, the controller may control, based on the warning sign, the entire aerosol generating apparatus 100 not to start. Certainly, in this case, the heating element 30 does not start either.

It should be noted that, after the controller outputs the warning sign during current operation, the controller does not control the heating element 30 to stop working. In other words, within the current operating cycle, even if the warning sign is outputted, the heating element 30 continues to work, so that the user can complete inhaling in the current operating cycle, but inhaling experience may deteriorate.

In some embodiments, when the preheating phase is completed, the aerosol generating apparatus 100 generates prompt information through a prompt unit, to notify the user that the preheating phase is completed. The prompt unit may be, for example, a vibration motor or the indicator light. Therefore, the threshold voltage may alternatively be a minimum voltage required by the prompt unit for normal operation. When the output voltage value of the battery cell 10 is less than the minimum voltage of the prompt unit, that is, less than the threshold voltage, the prompt unit cannot operate normally, and the prompt unit cannot generate the prompt information when the preheating phase ends, so that the user does not know when the aerosol generating apparatus 100 completes preheating. Therefore, it is proper to use the minimum voltage required by the prompt unit for normal operation as the threshold voltage.

In some embodiments, after the warning sign is generated, the warning sign further needs to be canceled, so that the aerosol generating apparatus 100 can be normally used after being recharged. As shown in FIG. 6, the control method further includes the following steps:

> S40: Acquire a charging signal of the aerosol generating apparatus.
> S50: Cancel the warning sign based on the charging signal.

The aerosol generating apparatus 100 usually further includes a charging and discharging unit. The charging and discharging unit is electrically connected to the controller and is configured to control an external charging device such as an adapter or a power bank to charge the battery cell 10. When the aerosol generating apparatus 100 is being charged, the controller can obtain a charging signal, and the controller can further cancel the warning sign based on the charging signal. Because the electric quantity of the battery cell 10 is replenished after being charged, the warning sign no longer needs to be set for the aerosol generating apparatus 100.

Further, in some embodiments, to avoid inadequate electric energy replenishment of the battery cell 10 because the user charges the aerosol generating apparatus 100 for insufficient duration, step S50 may further include the following steps:

S51: Record maintaining duration of the charging signal.

Specifically, a timer may be disposed in the aerosol generating apparatus 100, and the timer is electrically connected to the controller. When the controller obtains the charging signal, the controller simultaneously controls the timer to start operation, to record the maintaining duration of the charging signal, until the user no longer charges the aerosol generating apparatus 100.

S52: Control to cancel the warning sign if the maintaining duration reaches preset duration; or keep the warning sign if the maintaining duration is less than the preset duration.

Specifically, the preset duration may be preset in the aerosol generating apparatus 100. When the maintaining duration in step S51 reaches the preset duration, it indicates that the electric quantity of the battery cell 10 is sufficiently replenished, and the controller can cancel the warning sign, to recover normal use of the aerosol generating apparatus 100. However, when the maintaining duration is less than the preset duration, it indicates that the charging time is excessively short, the electric quantity of the battery cell 10 replenished is too small for the aerosol generating apparatus 100 to complete a next complete operating cycle. Therefore, the warning sign needs to be maintained. In addition, to inform the user that excessively short charging time may prevent the aerosol generating apparatus 100 from starting heating in the next operating cycle, prompt information may be set when the user cancels charging the aerosol generating apparatus 100, to inform the user of content such as the charging time is excessively short and heating cannot be started, or similar content, so that the user can continue to charge until the charging time reaches the preset duration.

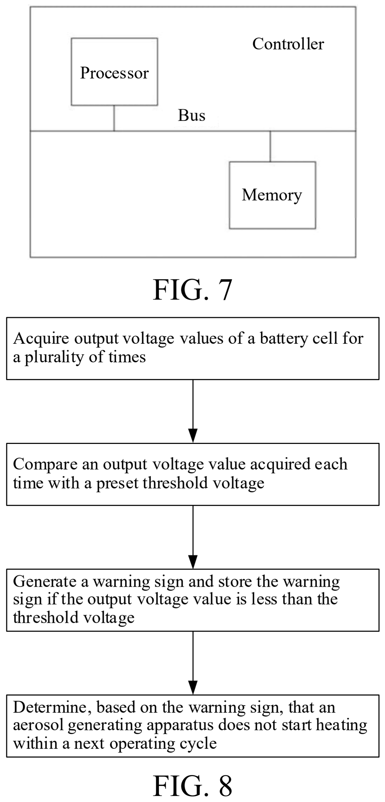

In some embodiments, it may also be possible to avoid comparing the minimum voltage value outputted by the battery cell 10 with the threshold voltage. As shown in FIG. 8, FIG. 8 is a flowchart of steps of a control method for the aerosol generating apparatus 100 according to another embodiment of this application. The method includes the following steps:

> S60: Acquire an output voltage value of the battery cell.
> S70: Compare the output voltage value with a preset threshold voltage.
> S80: Generate a warning sign and store the warning sign if the output voltage value is less than the threshold voltage.
> S90: Determine, based on the warning sign, that the aerosol generating apparatus does not start heating within a next operating cycle.

Specifically, the aerosol generating apparatus 100 is provided with a voltage detection unit used to detect the output voltage of the battery cell 10. The voltage detection unit is electrically connected to the controller. The voltage detection unit can send a current detected output voltage value of the battery cell 10 to the controller. In addition, the threshold voltage is prestored in the controller of the aerosol generating apparatus 100, so that the controller can compare the output voltage value of the battery cell 10 with the threshold voltage. The threshold voltage refers to a minimum voltage value that can basically satisfy normal operation of the entire system of the aerosol generating apparatus 100 within the current operating cycle.

If the output voltage value of the battery cell 10 is less than the threshold voltage, it indicates that the battery cell 10 is substantially depleted at this time. If not charged, the electric quantity of the battery cell 10 is insufficient to maintain the aerosol generating apparatus 100 to complete the next operating cycle, that is, insufficient to complete a complete heating process in the next operating cycle, so that the controller generates the warning sign, and stores the warning sign. When the aerosol generating apparatus 100 is started in the next operating cycle, the aerosol generating apparatus 100 can check, in advance, whether there is the warning sign. If there is the warning sign, the controller can control, based on the warning sign, the heating element 30 not to work, that is, control the aerosol generating apparatus 100 not to start heating, to prevent the aerosol generating apparatus 100 from generating abnormalities within the next operating cycle due to insufficient electric quantity of the battery cell 10.

However, if the output voltage value of the battery cell 10 is greater than the threshold voltage, it indicates that in this case, the electric quantity of the battery cell 10 is sufficient. In this case, the controller does not generate the warning sign, and the aerosol generating apparatus 100 can normally heat up in the next operating cycle. The controller can control the aerosol generating apparatus 100 to periodically acquire the output voltage value of the battery cell 10 in the current operating cycle. The higher frequency and more times of acquisition, the more promptly it can be determined whether the current output voltage value of the battery cell 10 is less than the threshold voltage.

Therefore, in the control method for the aerosol generating apparatus 100 according to this embodiment, the minimum voltage value outputted by the battery cell 10 within the current operating cycle does not need to be acquired, and the output voltage of the battery cell 10 obtained each time only needs to be directly compared with the threshold voltage. If the output voltage value of the battery cell 10 is less than the threshold voltage during a comparison, the warning sign is generated.

Further, as shown in FIG. 7, the controller includes at least one processor and a memory in a communication connection to the at least one processor. One processor is used as an example in FIG. 7. The memory stores instructions executable by the at least one processor. The instructions are executed by the at least one processor to enable the at least one processor to perform the control method in the foregoing embodiments. The processor and the memory may be connected through a bus or in another manner. In FIG. 7, a bus connection is used as an example.

The processor may be implemented by using at least one of the following: an application-specific integrated circuit (ASIC), a digital signal processor (DSP), a digital signal processing device (DSPD), a programmable logic device (PLD), a field programmable gate array (FPGA), a processor, a controller, a microcontroller, a microprocessor, or another electronic unit performing the functions.

The memory includes a high-speed random memory, and may also include a non-volatile memory, for example, at least one magnetic disk storage, a flash memory, or another non-volatile solid-state memory. In some embodiments, the memory may optionally include memories remotely disposed relative to the processor, and the remote memories may be connected to the aerosol generating apparatus through a network. Examples of the network include, but are not limited to, the Internet, an intranet, a local area network, a mobile communication network, and a combination thereof.

The memory is configured to store a non-volatile software program, a non-volatile computer-executable program, and a module, such as program instructions/units corresponding to the control method/apparatus involved in this specification. The processor runs the non-volatile software program, instructions, and units stored in the memory, to implement various functional applications and data processing of the aerosol generating apparatus, that is, implement the control method described in the foregoing embodiments.

Finally, it should be noted that the foregoing embodiments are merely used for describing the technical solutions of this application, but are not intended to limit this application. Under the concept of this application, the technical features in the foregoing embodiments or different embodiments may be combined, the steps may be implemented in any sequence, and there may be many other changes in different aspects of this application as described above. For brevity, those are not provided in detail. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of this application.

**Claims**

1. A control method for an aerosol generating apparatus, wherein the aerosol generating apparatus comprises a heating element and a battery cell, the battery cell is configured to provide power to the heating element, and the heating element is configured to heat an aerosol product to generate an aerosol, the control method comprising:

   acquiring a minimum voltage value outputted by the battery cell within a current operating cycle;
   comparing the minimum voltage value with a preset threshold voltage;
   generating a warning sign and storing the warning sign if the minimum voltage value is less than the threshold voltage; and
   determining, based on the warning sign, that the aerosol generating apparatus does not start heating within a next operating cycle.

2. The control method according to claim 1, wherein the acquiring a minimum voltage value outputted by the battery cell within a current operating cycle comprises:

   acquiring a voltage value outputted by the battery cell when a preheating phase ends; and
   determining the voltage value as the minimum voltage value.

3. The control method according to claim 1, wherein the acquiring a minimum voltage value outputted by the battery cell within a current operating cycle comprises:

    acquiring a current output voltage value of the battery cell;
    comparing the current output voltage value with a previous output voltage value of the battery cell; and
    storing the current output voltage value if the current output voltage value is less than the previous output voltage value of the battery cell; or
    storing the previous output voltage value if the current output voltage value is greater than the previous output voltage value of the battery cell.

4. The control method according to claim 1, wherein the preset threshold voltage comprises a minimum system operating voltage.

5. The control method according to claim 2, wherein the aerosol generating apparatus further comprises a prompt unit, the prompt unit is configured to generate prompt information when the preheating phase ends, and the threshold voltage comprises a minimum voltage required by the prompt unit for normal operation.

6. The control method according to claim 2, wherein the acquiring a voltage value outputted by the battery cell when a preheating phase ends comprises:

    acquiring a current temperature of the heating element; and
    controlling, if the current temperature reaches a preset temperature in the preheating phase, to acquire a voltage value outputted by the battery cell.

7. The control method according to claim 1, wherein the method further comprises:

    acquiring a charging signal of the aerosol generating apparatus; and
    canceling the warning sign based on the charging signal.

8. The control method according to claim 7, wherein the releasing the warning sign based on the charging signal further comprises:

    recording maintaining duration of the charging signal;
    controlling, if the maintaining duration reaches preset duration, to cancel the warning sign; or
    keeping the warning sign if the maintaining duration is less than the preset duration.

9. The control method according to claim 1, wherein during the generating a warning sign and storing the warning sign if the voltage value is less than the threshold voltage, the method further comprises:

    controlling the heating element not to stop heating within the current operating cycle.

10. A control method for an aerosol generating apparatus, wherein the aerosol generating apparatus comprises a heating element and a battery cell, the battery cell is configured to provide power to the heating element, and the heating element is configured to heat an aerosol product to generate an aerosol, the control method comprising:

    acquiring output voltage values of the battery cell for a plurality of times;
    comparing an output voltage value acquired each time with a preset threshold voltage;
    generating a warning sign and storing the warning sign if the output voltage value is less than the threshold voltage; and
    determining, based on the warning sign, that the aerosol generating apparatus does not start heating within a next operating cycle.

11. An aerosol generating apparatus, comprising a controller, wherein the controller comprises a processor and a memory, the memory stores a computer program, and the processor implements the control method for an aerosol generating apparatus according to any one of claims 1 to 10 when executing the computer program.

12. The apparatus according to claim 11, wherein the aerosol generating apparatus comprises an LDO circuit electrically connected to the battery cell, and the threshold voltage comprises a minimum input voltage of the LDO circuit.

FIG. 1

FIG. 2

Acquire a minimum voltage value outputted by a battery cell within a current operating cycle

Compare the minimum voltage value with a preset threshold voltage

Generate a warning sign and store the warning sign if the output voltage value is less than the threshold voltage

Determine, based on the warning sign, that an aerosol generating apparatus does not start heating within a next operating cycle

FIG. 3

Diagram of a heating curve of a first operating cycle

Diagram of a heating curve of a second operating cycle

FIG. 4

Acquire a current output voltage value of a battery cell

Compare the current output voltage value with a previous output voltage value of the battery cell

Store the current output voltage value if the current output voltage value is less than the previous output voltage value of the battery cell; or store the previous output voltage value if the current output voltage value is greater than the previous output voltage value of the battery cell

## FIG. 5

Acquire a charging signal of an aerosol generating apparatus

Cancel the warning sign based on the charging signal

## FIG. 6

```
┌─────────────────────────────────────────────┐
│                                 Controller    │
│   ┌──────────────┐                            │
│   │              │                            │
│   │  Processor   │                            │
│   │              │                            │
│   └──────┬───────┘    Bus                     │
│──────────┴────────────────────┬──────────────│
│                        ┌───────┴──────┐       │
│                        │              │       │
│                        │    Memory    │       │
│                        │              │       │
│                        └──────────────┘       │
│                                               │
└─────────────────────────────────────────────┘
```

## FIG. 7

```
┌────────────────────────────────────────────────┐
│ Acquire output voltage values of a battery cell  │
│ for a plurality of times                         │
└────────────────────────────────────────────────┘
                        │
                        ▼
┌────────────────────────────────────────────────┐
│ Compare an output voltage value acquired each    │
│ time with a preset threshold voltage             │
└────────────────────────────────────────────────┘
                        │
                        ▼
┌────────────────────────────────────────────────┐
│ Generate a warning sign and store the warning    │
│ sign if the output voltage value is less than the │
│ threshold voltage                                │
└────────────────────────────────────────────────┘
                        │
                        ▼
┌────────────────────────────────────────────────┐
│ Determine, based on the warning sign, that an    │
│ aerosol generating apparatus does not start      │
│ heating within a next operating cycle            │
└────────────────────────────────────────────────┘
```

## FIG. 8

# EP 4 728 913 A1

<table>
<tr><td colspan="2">INTERNATIONAL SEARCH REPORT</td><td>International application No.<br><br>**PCT/CN2024/097524**</td></tr>
</table>

| | |
|---|---|
| **A.** | **CLASSIFICATION OF SUBJECT MATTER**<br>A24F 40/57(2020.01)i; A24F 40/50(2020.01)i; A24F 40/90(2020.01)i<br><br>According to International Patent Classification (IPC) or to both national classification and IPC |

| | |
|---|---|
| **B.** | **FIELDS SEARCHED** |

Minimum documentation searched (classification system followed by classification symbols)

IPC:A24F

Documentation searched other than minimum documentation to the extent that such documents are included in the fields searched

Electronic data base consulted during the international search (name of data base and, where practicable, search terms used)

CNTXT: ENTXTC; VEN: 气溶胶, 电池, 电压, 阈值, 充电, aerosol, battery, voltage, threshold, charge

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | WO 2022269044 A1 (JT INTERNATIONAL S.A.) 29 December 2022 (2022-12-29)<br>description, pages 9-38, and figures 1-10 | 1-12 |
| Y | WO 2022230322 A1 (JAPAN TOBACCO INC.) 03 November 2022 (2022-11-03)<br>description, paragraphs [0025]-[0051], and figures 1-5 | 1-12 |
| A | CN 106231934 A (PHILIP MORRIS PRODUCTS S.A.) 14 December 2016 (2016-12-14)<br>entire document | 1-12 |
| A | CN 106255428 A (SIS RESOURCES, LTD.) 21 December 2016 (2016-12-21)<br>entire document | 1-12 |
| A | CN 113412968 A (SHENZHEN MAISHI TECHNOLOGY CO., LTD.) 21 September 2021<br>(2021-09-21)<br>entire document | 1-12 |
| A | US 2023084282 A1 (JAPAN TOBACCO INC.) 16 March 2023 (2023-03-16)<br>entire document | 1-12 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br><br>**29 September 2024** | Date of mailing of the international search report<br><br>**30 September 2024** |
|---|---|
| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer<br><br><br><br>Telephone No. |

Form PCT/ISA/210 (second sheet) (July 2022)

## INTERNATIONAL SEARCH REPORT
### Information on patent family members

| International application No. |
|---|
| **PCT/CN2024/097524** |

| Patent document cited in search report | | | Publication date (day/month/year) | Patent family member(s) | | | Publication date (day/month/year) |
|---|---|---|---|---|---|---|---|
| WO | 2022269044 | A1 | 29 December 2022 | KR | 20240026448 | A | 28 February 2024 |
| | | | | EP | 4358775 | A1 | 01 May 2024 |
| | | | | JP | 2024523102 | A | 28 June 2024 |
| | | | | US | 2024225122 | A1 | 11 July 2024 |
| | | | | CN | 117479856 | A | 30 January 2024 |
| WO | 2022230322 | A1 | 03 November 2022 | | None | | |
| CN | 106231934 | A | 14 December 2016 | MX | 2016014082 | A | 09 February 2017 |
| | | | | AR | 100227 | A1 | 21 September 2016 |
| | | | | RU | 2016146735 | A | 31 May 2018 |
| | | | | RU | 2016146735 | A3 | 10 July 2018 |
| | | | | RU | 2676994 | C2 | 14 January 2019 |
| | | | | BR | 112016022630 | A2 | 15 August 2017 |
| | | | | BR | 112016022630 | A8 | 06 April 2021 |
| | | | | BR | 112016022630 | B1 | 03 March 2022 |
| | | | | TW | 201605362 | A | 16 February 2016 |
| | | | | TWI | 659702 | B | 21 May 2019 |
| | | | | CA | 2935971 | A1 | 05 November 2015 |
| | | | | CA | 2935971 | C | 28 March 2023 |
| | | | | KR | 20160147256 | A | 22 December 2016 |
| | | | | KR | 102502317 | B1 | 23 February 2023 |
| | | | | US | 2017027234 | A1 | 02 February 2017 |
| | | | | US | 11147316 | B2 | 19 October 2021 |
| | | | | JP | 2017514463 | A | 08 June 2017 |
| | | | | JP | 6507179 | B2 | 24 April 2019 |
| | | | | IL | 246452 | A0 | 31 August 2016 |
| | | | | IL | 246452 | B | 01 February 2022 |
| | | | | ZA | 201604072 | B | 26 July 2017 |
| | | | | UA | 120704 | C2 | 27 January 2020 |
| | | | | AU | 2015252281 | A1 | 07 July 2016 |
| | | | | AU | 2015252281 | B2 | 02 January 2020 |
| | | | | MY | 189433 | A | 11 February 2022 |
| | | | | PH | 12016501163 | A1 | 18 July 2016 |
| | | | | WO | 2015165747 | A1 | 05 November 2015 |
| | | | | SG | 11201605880 | XA | 29 November 2016 |
| | | | | EP | 3136888 | A1 | 08 March 2017 |
| CN | 106255428 | A | 21 December 2016 | EP | 3123186 | A2 | 01 February 2017 |
| | | | | US | 2015272223 | A1 | 01 October 2015 |
| | | | | IL | 247961 | A0 | 30 November 2016 |
| | | | | WO | 2015155612 | A2 | 15 October 2015 |
| | | | | WO | 2015155612 | A3 | 31 March 2016 |
| | | | | EA | 201691950 | A1 | 30 January 2017 |
| CN | 113412968 | A | 21 September 2021 | | None | | |
| US | 2023084282 | A1 | 16 March 2023 | JPWO | 2022130465 | A1 | 23 June 2022 |
| | | | | TW | 202222182 | A | 16 June 2022 |
| | | | | KR | 20230120565 | A | 17 August 2023 |
| | | | | WO | 2022130465 | A1 | 23 June 2022 |
| | | | | EP | 4260743 | A1 | 18 October 2023 |

Form PCT/ISA/210 (patent family annex) (July 2022)

**EP 4 728 913 A1**

**Patent documents cited in the description**

- CN 202310702591